# EUROPEAN PATENT APPLICATION

(11) **EP 4 737 685 A1**
(43) Date of publication of application: **06.05.2026**
(21) Application number: 25212038.1
(22) Date of filing: 29.10.2025
(51) Int. Cl.: F01D 5/16, F01D 9/04, B22F 5/04, B33Y 80/00, F01D 5/14

(54) **FAN EXIT GUIDE VANE WITH ACOUSTIC TREATMENT, GAS TURBINE ENGINE AND PROCESS FOR FORMING A FAN EXIT GUIDE VANE WITH ACOUSTIC TREATMENT**

(30) Priority: 31.10.2024 US 202418933412
(71) Applicant: RTX Corporation, Farmington, CT 06032 (US)
(72) Inventor: Yazici, Murat, Glastonbury, 06033 (US); Breault, Andrew E., Bolton, 06043 (US); Morton, Jeffrey T., Glastonbury, 06033 (US)
(74) Representative: Schmitt-Nilson Schraud Waibel Wohlfrom Patentanwälte Partnerschaft mbB

(57) **Abstract**

A fan exit guide vane with acoustic treatment includes a leading edge and a trailing edge opposite chordwise from the leading edge; a radially inner attachment region opposite spanwise from a radially outer attachment region; a span dimension extending between the radially inner attachment region and the radially outer attachment region; a chord dimension extending between the leading edge and the trailing edge; a pressure side opposite a suction side of the fan exit guide vane; and an acoustic zone integrally formed within the fan exit guide vane.
A gas turbine engine includes the fan exit guide vane with acoustic treatment. A process forms the fan exit guide vane with acoustic treatment.

## Description

The present disclosure is directed to the improved acoustic zone integrally formed in a fan exit guide vane structure.

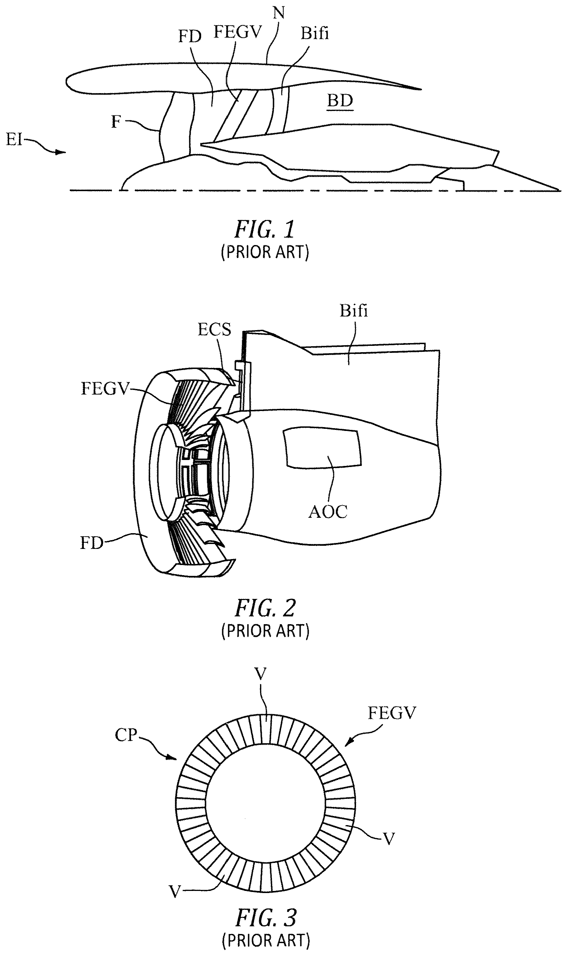

Current gas turbine engine design, as seen in Fig. 1 through Fig. 4a, includes a design with variable or non-variable fan exit guide vanes (FEGV). The fan F is positioned within the fan duct FD proximate the engine inlet EI. The fan exit guide vanes (FEGV) are downstream from the fan F and located forward of the bypass duct BD.

A current FEGV pattern is created to minimize airflow back pressure adverse effect on fan blades F caused by the downstream presence of nacelle N bypass duct BD elements (Fig. 2), such as the upper and lower bifurcation BiFi, air-to-oil cooler (AOC), and environmental control system inlet ECS.

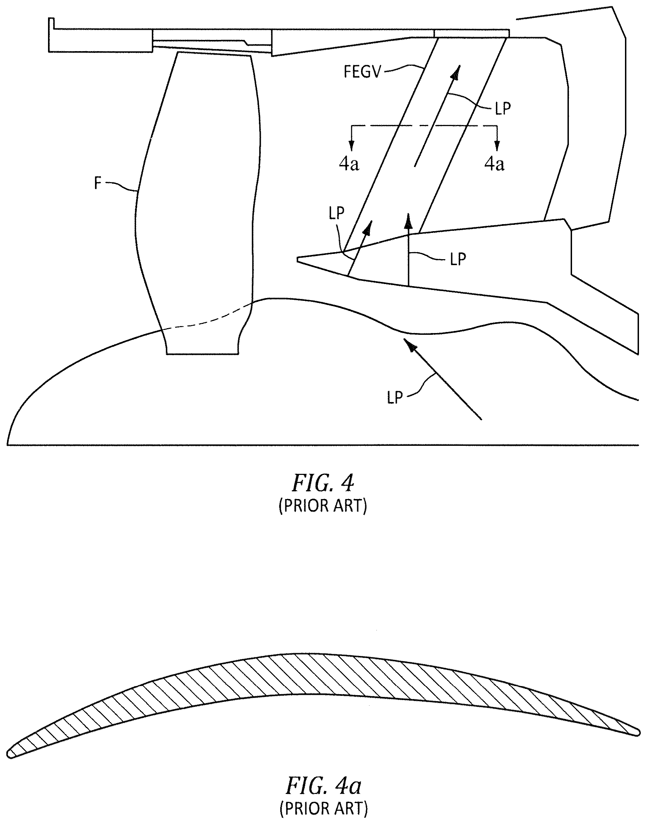

As seen in Fig. 3, the FEGV has a circumferential pattern CP made up of vanes V that can translate the structural load path LP shown as arrows in Fig. 4. All vane types are designed with the same cross sectional monolithic load carrying features (Fig. 4a). Additionally, the FEGV pattern aims to optimize the fan duct performance and acoustic characteristics of the gas turbine engine.

The FEGV pattern is defined to meet structural, performance and acoustic requirements across a wide range of operating conditions. It is therefore not optimized at any single mission condition, like cruise condition or climb condition. Engine noise targets are getting more challenging for future programs. Engine and airframe makers are looking for more opportunities for noise reduction. At the engine side, acoustic treatable areas are limited. Fan exit guide vanes are an area for noise reduction opportunities.

In accordance with the present disclosure, there is provided a fan exit guide vane with acoustic treatment comprising a leading edge and a trailing edge opposite chordwise from the leading edge; a radially inner attachment region opposite spanwise from a radially outer attachment region; a span dimension extending between the radially inner attachment region and the radially outer attachment region; a chord dimension extending between the leading edge and the trailing edge; a pressure side opposite a suction side of the fan exit guide vane; an acoustic zone formed within the fan exit guide vane.

Particular embodiments further may include at least one, or a plurality of, the following optional features, alone or in combination with each other:

A further embodiment of any of the foregoing embodiments may additionally and/or alternatively include the acoustic zone is formed in the fan exit guide vane at predetermined locations along the span of the fan exit guide vane.

A further embodiment of any of the foregoing embodiments may additionally and/or alternatively include the acoustic zone is located on the pressure side of the fan exit guide vane.

A further embodiment of any of the foregoing embodiments may additionally and/or alternatively include the acoustic zone extends at least one of spanwise through the fan exit guide vane between the radially inner attachment region and the radially outer attachment region or chordwise between the leading edge and the trailing edge.

A further embodiment of any of the foregoing embodiments may additionally and/or alternatively include the fan exit guide vane with acoustic treatment further comprising the acoustic treatment formed within the acoustic zone, the acoustic treatment configured to dissipate sound energy.

A further embodiment of any of the foregoing embodiments may additionally and/or alternatively include the acoustic zone is configured integral with the material of the fan exit guide vane.

A further embodiment of any of the foregoing embodiments may additionally and/or alternatively include the acoustic zone is located adjacent a structural region.

In accordance with the present disclosure, there is provided a gas turbine engine with a fan exit guide vane with acoustic treatment comprising a fan located within a fan duct; an array of fan exit guide vanes supported within the fan duct downstream from the fan, the array of fan exit guide vanes span across the fan duct attached to a radially inner surface of the fan duct and a radially outer surface of the fan duct; wherein a fan exit guide vane of the array of fan exit guide vanes comprising a leading edge and a trailing edge opposite chordwise from the leading edge; a radially inner attachment region opposite spanwise from a radially outer attachment region; a span dimension extending between the radially inner attachment region and the radially outer attachment region; a chord dimension extending between the leading edge and the trailing edge; a pressure side opposite a suction side of the fan exit guide vane; an acoustic zone integrally formed within the fan exit guide vane; and a structural region adjacent the acoustic zone.

Particular embodiments further may include at least one, or a plurality of, the following optional features, alone or in combination with each other:

A further embodiment of any of the foregoing embodiments may additionally and/or alternatively include the acoustic zone is formed in the fan exit guide vane at predetermined locations along the span of the fan exit guide vane.

A further embodiment of any of the foregoing embodiments may additionally and/or alternatively include the gas turbine engine with a fan exit guide vane with acoustic treatment further comprising the acoustic treatment formed within the acoustic zone; the acoustic treatment configured to dissipate sound energy.

A further embodiment of any of the foregoing embodiments may additionally and/or alternatively include the acoustic zone is located on the pressure side of the fan exit guide vane.

A further embodiment of any of the foregoing embodiments may additionally and/or alternatively include the gas turbine engine with a fan exit guide vane with acoustic treatment further comprising a surface skin in operative communication with the acoustic zone and the acoustic treatment.

A further embodiment of any of the foregoing embodiments may additionally and/or alternatively include the acoustic zone extends at least one of spanwise through the fan exit guide vane from the radially inner attachment region to the radially outer attachment region or chordwise from the leading edge to the trailing edge.

In accordance with the present disclosure, there is provided a process for gas turbine engine with a fan exit guide vane with acoustic treatment comprising: locating a fan within a fan duct; supporting an array of fan exit guide vanes within the fan duct downstream from the fan; attaching the array of fan exit guide vanes spanned across the fan duct to a radially inner surface of the fan duct and a radially outer surface of the fan duct by; coupling a radially inner attachment region of the fan exit guide vane of the array of fan exit guide vanes in operative communication with the radially inner surface of the fan duct; and coupling a radially outer attachment region of the fan exit guide vane of the array of fan exit guide vanes in operative communication with the radially outer surface of the fan duct; forming an acoustic zone integral with the fan exit guide vane; and forming a structural region adjacent the acoustic zone.

Particular embodiments further may include at least one, or a plurality of, the following optional features, alone or in combination with each other:

A further embodiment of any of the foregoing embodiments may additionally and/or alternatively include the process further comprising forming the acoustic zone in the fan exit guide vane at predetermined locations of the fan exit guide vane.

A further embodiment of any of the foregoing embodiments may additionally and/or alternatively include the process further comprising forming the acoustic treatment within the acoustic zone; and configuring the acoustic treatment to dissipate sound energy.

A further embodiment of any of the foregoing embodiments may additionally and/or alternatively include the process further comprising locating the acoustic zone on the pressure side.

A further embodiment of any of the foregoing embodiments may additionally and/or alternatively includethe process further comprising configuring the acoustic zone extending at least one of spanwise through the fan exit guide vane between the radially inner attachment region and the radially outer attachment region or chordwise between the leading edge and the trailing edge.

A further embodiment of any of the foregoing embodiments may additionally and/or alternatively include the process further comprising forming a surface skin in operative communication with an exterior of the fan exit guide vane proximate the acoustic treatment.

A further embodiment of any of the foregoing embodiments may additionally and/or alternatively include the process further comprising shaping the acoustic zone to influence acoustic dampening capability in the proximity of the fan exit guide vane.

Other details of the acoustic zone integrally formed in a fan exit guide vane structure are set forth in the following detailed description and the accompanying drawings wherein like reference numerals depict like elements.
Fig. 1 is a schematic representation of a prior art gas turbine engine.
Fig. 2 is a schematic representation of a prior art gas turbine engine.
Fig. 3 is a schematic representation of a prior art fan exit guide vane pattern.
Fig. 4 is a schematic representation of a prior art fan exit guide vane with load path.
Fig. 4A is a sectional view schematic representation of the prior art fan exit guide vane Fig. 4.
Fig. 5 is a schematic representation of an exemplary fan exit guide vane with acoustic treatment.
Fig. 5a is a sectional view of schematic representation of the exemplary fan exit guide vane with acoustic treatment.

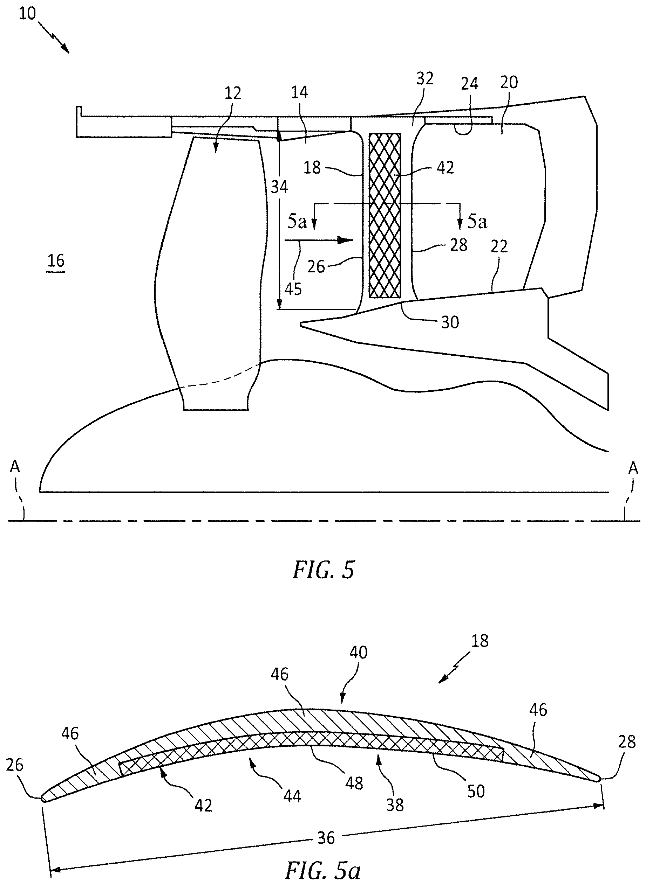

Referring now to Fig. 5 showing a schematic of a gas turbine engine 10. The gas turbine engine 10 includes a fan 12 with fan blades within a fan duct 14 proximate an engine inlet 16. Downstream from the fan 12 is a fan exit guide vane 18 upstream from a bypass duct 20.

The fan exit guide vane 18 spans across the fan duct 14 attached to a radially inner surface 22 of the fan duct 14 and a radially outer surface 24 of the fan duct 14.

With reference also to Fig. 5a, the fan exit guide vane 18 includes a leading edge 26 and a trailing edge 28 opposite chordwise from the leading edge 26.

The fan exit guide vane 18 includes a radially inner attachment region 30 proximate the radially inner surface 22. The fan exit guide vane 18 includes a radially outer attachment region 32 proximate the radially outer surface 24. The radially inner attachment region 30 is opposite spanwise from the radially outer attachment region 32. The radially inner attachment region 30 of the fan exit guide vane 18 attaches to the fan duct 14 at the radially inner surface 22. The radially outer attachment region 32 of the fan exit guide vane 18 attaches to the fan duct 14 at the radially outer surface 24. The fan exit guide vane 18 includes a pressure side 38 opposite a suction side 40.

The fan exit guide vane 18 includes a span 34 dimension extending between the radially inner attachment region 30 and the radially outer attachment region 32. The fan exit guide vane 18 includes a chord dimension 36 extending between the leading edge 26 and the trailing edge 28, as seen in Fig 5a. The fan exit guide vane 18 includes a pressure side 38 opposite a suction side 40.

The fan exit guide vane 18 shown in Fig 5 is oriented generally vertical, that is along a similar radial span between the radially inner surface 22 and radially outer surface 24 relative to the axis A. Alternatively, the fan exit guide vane 18 can include a canted orientation. In an exemplary embodiment, the vane stacking axis can be canted aft, that is the radially inner attachment region 30 is forward of the radially outer attachment region 32.

The fan exit guide vane 18 can include an acoustic treatment 42. The acoustic treatment 42 can be any material or structure configured to dissipate sound energy. The acoustic treatment 42 can include various materials and/or structures with sound-absorbing and diffusing properties. In an exemplary embodiment the acoustic treatment 42 can provide a broadband noise benefit from about 0.5 to 2 EPNdB. The acoustic treatment 42 can be varied from one fan exit guide vane 18 to another. The variation can be by varying the materials, the shape and the location of the acoustic treatment 42, as further described as follows. The materials of the acoustic treatment 42 can include, but are not limited to composites, metals, plastics, foams, and the like. The acoustic treatment is porous and/or shaped in a form that includes a plurality of cavities with a high surface area to fill ratio (e.g., many nooks and crannies) to enable the acoustic energy to enter and dissipate within. That is, the acoustic panel can be shaped to influence the acoustic dampening capability thereof. For example, the material may include a honeycomb structure, which enables significant acoustic dampening.

The acoustic treatment 42 can be formed integral with the fan exit guide vane 18. In an exemplary embodiment, there can be between 20 to 70 fan exit guide vanes 18 with acoustic treatment 42 in a fan exit guide vane array. The acoustic treatment 42 can be formed within an acoustic zone(s) 44 adjacent a structural region 46 as seen in cross section at Fig. 5a. The acoustic zone 44 can have a rectangular cross section and/or shape, oval cross section and/or shape, tee shape and/or cross section and the like (e.g., different shapes and/or cross sections, combinations of shapes and/or cross sections, etc.). The acoustic zone 44 can be formed in the fan exit guide vane 18 at predetermined locations along the span 34 of the fan exit guide vane 18 as seen in Fig. 5. The acoustic zone 44 can be aligned along the span 34. The acoustic zone 44 can be aligned chordwise.

The acoustic zone 44 can be configured to be constructed integrally utilizing additive manufacturing techniques, when creating the fan exit guide vane 18. The acoustic zone(s) 44 can allow for acoustic dampening features manufactured directly into the parent material along with the structural region(s) 46 of the fan exit guide vane 18. The location(s) and shape(s) of the acoustic zone 44 can be dependent on the design of the fan exit guide vane 18 final count/aero design, acoustic and attachment structural requirements. The acoustic zone 44 can be varied and shaped to influence the acoustic capability in proximity of the fan exit guide vane 18. The acoustic treatment 42 can be formed at a partial depth from the exterior 48 of the fan exit guide vane 18. The structure orientation, size, shape and density of the sponge-like acoustic treatment 42 can be varied and optimized to balance the structure requirements, durability/life requirements and acoustic benefits of the fan exit guide vane 18. In an exemplary embodiment, the acoustic treatment 42 can have an effective density of 25% or less relative to the remainder of the material forming the fan exit guide vane 18. Effective density can include the air in any hollow regions/pockets that are inherent due to the porous structure. The acoustic treatment 42 can be integrated on either the pressure side 38 or suction side 40.

A surface skin 50 as seen in Fig. 5a can be in operative communication with the acoustic zone 44 and the acoustic treatment 42. The surface skin 50 can be applied over acoustic zone 44 configured for aerodynamic benefit to the fan exit guide vane 18. The surface skin 50 can allow the sound energy to pass through and penetrate the acoustic treatment 42. The surface skin 50 can be additively manufactured in the same operation as the rest of the fan exit guide vane 18 and acoustic treatment 42.

A technical advantage of the disclosed acoustic zone integrally formed in a fan exit guide vane structure includes a capacity to dampen acoustic noise along the surfaces of fan exit guide vanes.

Another technical advantage of the disclosed acoustic zone integrally formed in a fan exit guide vane structure includes structural regions formed in the fan exit guide vanes configured to accommodate acoustic zones.

Another technical advantage of the disclosed acoustic zone integrally formed in a fan exit guide vane structure includes integrated structural regions with acoustic treatment.

Another technical advantage of the disclosed acoustic zone integrally formed in a fan exit guide vane structure includes a pattern of acoustic treatment integrated within the fan exit guide vanes enabling both aero and structural function.

There has been provided an acoustic zone integrally formed in a fan exit guide vane structure. While the acoustic zone integrally formed in a fan exit guide vane structure has been described in the context of specific embodiments thereof, other unforeseen alternatives, modifications, and variations may become apparent to those skilled in the art having read the foregoing description. Accordingly, it is intended to embrace those alternatives, modifications, and variations which fall within the broad scope of the appended claims.

## Claims

1. A fan exit guide vane comprising:
a leading edge and a trailing edge opposite chordwise from the leading edge; a radially inner attachment region opposite spanwise from a radially outer attachment region; a span dimension extending between the radially inner attachment region and the radially outer attachment region; a chord dimension extending between the leading edge and the trailing edge; a pressure side opposite a suction side of the fan exit guide vane;
an acoustic zone formed within the fan exit guide vane.

2. The fan exit guide vane according to claim 1, wherein the acoustic zone is formed in the fan exit guide vane at a predetermined location along the span of the fan exit guide vane.

3. The fan exit guide vane according to claim 1 or 2, wherein the acoustic zone is located on the pressure side of the fan exit guide vane.

4. The fan exit guide vane according to any of claims 1 to 3, wherein the acoustic zone extends at least one of spanwise through the fan exit guide vane between the radially inner attachment region and the radially outer attachment region or chordwise between the leading edge and the trailing edge.

5. The fan exit guide vane according to any of claims 1 to 4, further comprising:
an acoustic treatment formed within the acoustic zone, the acoustic treatment configured to dissipate sound energy.

6. The fan exit guide vane according to any of claims 1 to 5, wherein the acoustic zone is configured integral with the material of the fan exit guide vane.

7. The fan exit guide vane according to any of claims 1 to 6, wherein the acoustic zone is located adjacent a structural region.

8. The fan exit guide vane with acoustic treatment according to any of claims 1 to 7, wherein the acoustic zone is located on the pressure side of the fan exit guide vane.

9. A gas turbine engine with a fan exit guide vane with acoustic treatment comprising:
a fan located within a fan duct; and
an array of fan exit guide vanes supported within the fan duct downstream from the fan, the array of fan exit guide vanes span across the fan duct attached to a radially inner surface of the fan duct and a radially outer surface of the fan duct; wherein a fan exit guide vane of the array of fan exit guide vanes comprises the configuration of the fan exit guide vane according to any of claims 1 to 8 and a structural region adjacent the acoustic zone.

10. A process for creating a fan exit guide vane with acoustic treatment comprising:
supporting an array of fan exit guide vanes within a fan duct downstream from a location associated with a fan;
attaching the array of fan exit guide vanes spanned across the fan duct to a radially inner surface of the fan duct and a radially outer surface of the fan duct by;
coupling a radially inner attachment region of the fan exit guide vane of the array of fan exit guide vanes in operative communication with the radially inner surface of the fan duct; and
coupling a radially outer attachment region of the fan exit guide vane of the array of fan exit guide vanes in operative communication with the radially outer surface of the fan duct;
forming an acoustic zone integral with the fan exit guide vane; and
forming a structural region adjacent the acoustic zone.

11. The process according to claim 10, further comprising:
forming the acoustic zone in the fan exit guide vane at a predetermined location of the fan exit guide vane.

12. The process according to claim 10 or 11, further comprising:
forming the acoustic treatment within the acoustic zone; and
configuring the acoustic treatment to dissipate sound energy.

13. The process according to claim any of claims 10 to 12, further comprising:
locating the acoustic zone on the pressure side of the fan exit guide vane.

14. The process according to any of claims 10 to 13, further comprising:
configuring the acoustic zone extending at least one of spanwise through the fan exit guide vane between the radially inner attachment region and the radially outer attachment region or chordwise between a leading edge and a trailing edge.

15. The process according to any of claims 10 to 14, further comprising:
forming a surface skin in operative communication with an exterior of the fan exit guide vane proximate the acoustic treatment; and/or
further comprising:
shaping the acoustic zone to influence acoustic dampening capability in the proximity of the fan exit guide vane.
